Europäisches Patentamt

European Patent Office

Office européen des brevets

(19)

(11) **EP 1 489 602 A1**

(12) **EUROPEAN PATENT APPLICATION**
published in accordance with Art. 158(3) EPC

(43) Date of publication:
**22.12.2004 Bulletin 2004/52**

(51) Int Cl.[7]: **G11B 7/0045**, G11B 7/006

(21) Application number: **03715369.9**

(86) International application number:
**PCT/JP2003/003180**

(22) Date of filing: **17.03.2003**

(87) International publication number:
**WO 2003/079336 (25.09.2003 Gazette 2003/39)**

(84) Designated Contracting States:
**AT BE BG CH CY CZ DE DK EE ES FI FR GB GR
HU IE IT LI LU MC NL PT RO SE SI SK TR**

(30) Priority: **15.03.2002 JP 2002071857**

(71) Applicant: **Ricoh Company, Ltd.
Tokyo 143-8555 (JP)**

(72) Inventor: **SHIMOFUKU, Akira
Atsugi-shi, Kanagawa 243-0203 (JP)**

(74) Representative: **Barz, Peter
Patentanwalt
Kaiserplatz 2
80803 München (DE)**

(54) **RECORDING APPARATUS AND RECORDING METHOD**

(57)   A recording quality is improved when performing information recording or rewriting on a phase-change type optical recording medium according to a multi-speed method. A recording apparatus (1) performs optical informational recording or rewriting on a phase-change type optical recording medium (2) according to the multi-speed method by a recording wave which has been subjected to a pulse-width modulation (PWM). Recording or rewriting of a 1-signal having a signal with nT after modulation is nT is performed by a pulse train recording wave having a pulse part fp, a multipulse part mp and a pulse part ep. On the assumption that a time with of the pulse part fp is x and a time width of the pulse part ep is z, a relationship between the time width x and the time width z satisfies $3z \leqq x \leqq 4.5z$.

FIG.3A  INPUT SIGNAL

FIG.3B  n'=1

FIG.3C  n'=2

FIG.3D  n'=3

**EP 1 489 602 A1**

**Description**

TECHNICAL FIELD

The present invention generally relates to recording apparatuses and methods and, more particularly, to a recording apparatus and method for recording information on a phase-change type optical recording medium.

BACKGROUND ART

With recent increase in an amount of information, large capacity information recording media such as CD-ROM (Compact Disc Read Only Memory) and CD-R (Compact Disc Recordable) have become popular. Since it is easy to acquire compatibility with such CD-ROM and CD-R, phase-change type optical recording media such as CD-RW (Compact Disc Rewritable) have been developed and used widely. The standard of double speed recording (2.4 - 2.8 m/s) for the phase change type recording media is defined in accordance with the orange book part III (ver1.0) issued in October, 1996. The optical disc apparatuses that can perform recording, reproducing and rewriting of information on the phase change type recording media have also become popular.

For example, Japanese Laid-Open Patent Applications No. 9-138946, No. 9-138947 and No. 9-219021 disclose a technique with respect to a recording apparatus and a recording method in which an output power of a light-emitting element is pulse width modulated (PWM) when optically performing information recording or rewriting on a phase change optical recording medium so as to perform recording or rewriting of signal 0 of which signal width after modulation is nT (T is a clock time) by a recording wave with a power level e and perform recording or rewriting of signal 1 of which signal width after modulation by a recording wave which is a pulse train having a pulse part fp which raises a temperature of a recording layer of the phase change recording medium higher than a melting point to form a head part of a recording mark, a multi-pulse part mp which raises a temperature of the recording layer to form an intermediate part of the recording mark, and a pulse part ep which cools the recording layer to form a rear part of the recording mark so that x, y and z are 0.5 T$\leqq$x$\leqq$2.0T, 0.4$\leqq$y$\leqq$0.6, and 0.5 T$\leqq$z$\leqq$1.0T where n' is a positive integer of n'$\leqq$n, (a and c)$\geqq$e$\geqq$(b and d) . Here, a time width of the pulse part fp is x, a power level of the pulse part fp is a, a power level of a low-level pulse of the multi-pulse part mp is b, a power level of a high-level pulse of the multi pulse mp is c, a duty ratio of the power level b to the power level c in the multi-pulse part mp is y, a time width of a repetition unit which is a sum of the power level b and the power level c in the multi-pulse part mp is T, a number of repetition of the power level b and the power level c in the multi-pulse part mp is n-n', a time width of the pulse part ep is z, and a power level of the pulse part ep is d.

According to the technology disclosed in the publications of the patent applications, it can be attempted to stabilize quality of recording signals when performing repeat recording by overwriting. However, since it takes a long recording time in such recording at a low linear velocity, it is desirous to achieve a high-speed rewritable compact disc and a recording method thereof. According to the conventional technique, a sufficient signal quality cannot be obtained when performing a 8x speed recording and 10x speed recording with a recording strategy having fp, mp and op at which recoding can be performed at a CD linear velocity of 4x (=4 times speed), and there is a problem of degradation of signal quality in an overwrite according to different recording linear velocities such as an overwrite of 10x speed recording on a part recorded at CD linear velocity of 4x or an overwrite of 4x speed recording on a part recorded at a CD linear velocity of 10x speed or an overwrite to a CLV recorded part according to CAV recording or an overwrite to a CAV recorded part according the CLV recording. That is, the technology disclosed in the above-mentioned Japanese Laid-Open Patent Applications No. 9-138946, No. 9-138947 and No. 9-219021 cannot deal with, and it is sought for a technique which can perform recording at a plurality of linear velocities (multi-speed recording) on a single information recording medium in an overwritable information recording medium, especially, in a phase change type recording medium.

Thus, with regard to such a technological demand, it was found that an optical recording medium which is rewritable at a higher speed can be acquired by specifying a film thickness of each layer and a composition of a recording layer that form a phase-change type optical recording medium, and specifying time widths of the fp part and the ep part of the recording wave pulse train when recording or rewriting on the optical recording medium as 0.5 T$\leqq$x$\leqq$2.0T and 0.125 T$\leqq$z$\leqq$1.0T, respectively, and specifying the duty ratio of the mp part as 0.125$\leqq$y$\leqq$0.875. Additionally, it was reported that a multi-speed recording can be coped with, when performing information recording on an optical recording medium, by increasing or decreasing the duty ratio of the mp portion of the recording wave pulse train according to the recording liner velocity when recording or rewriting signals.

However, a sufficient signal quality cannot yet be acquired even by the recording method for the optical recording medium having such an improved and specified feature especially when performing recording at a recording speed exceeding 10x,

DISCLOSURE OF THE INVENTION

It is a general object of the present invention to provide an improved and useful recording apparatus and recording method in which the above-mentioned problems are eliminated.

A more specific object of the present invention is to provide a recording apparatus and recording method which can attempt an improvement of a signal quality when recording or rewriting at multi-speed recording on a phase-change type optical recording medium.

Another object of the present invention is to provide recording apparatus and method which can attempt an improvement of a signal quality when performing recording or rewriting in a high linear velocity area of more than 10-time speed on a phase-change type optical recording medium.

In order to achieve the above-mentioned objects, there is provided according to one aspect of the present invention a recording apparatus comprising: a light-emitting element emitting a light to be irradiated onto a phase-change type optical recording medium; rotational drive means for rotationally driving said phase-change type optical recording medium; multi-recording control means for optically performing information recording or rewriting on said phase-change type optical recording medium by said light-emitting element and said rotational drive means according to a multi-speed method; and modulation means for pulse-width-modulating (PWM) the light emitted from said light-emitting element when performing the information recording or rewriting by said multi-speed recording control means, wherein recording or rewriting of a 0-signal having a signal width equal to $nT$ ($T$ is a clock time) after modulation by said modulation means is performed by a recording wave which is a continuous light of a power level of e, recording or rewriting of 1-signal having a signal width equal to $nT$ after modulation by said modulation means is performed by a recording wave which is a pulse train having a pulse part fp, a multipulse part mp and a pulse part ep, the pulse part fp for forming a head part of a recording mark by raising a temperature of a recording layer of said phase-change type optical recording medium at a temperature equal to or higher than a melting point, the multipulse part mp for forming a middle part of the recording mark by raising a temperature of the recording layer, the pulse part ep for forming a rear end of the recording mark by cooling the recording layer, and time widths x, y and z, power levels a, b, c, d and e, and numbers of times of repetition n and n' satisfy the following relationships: $0.5\,T \leq x \leq 2.0T$, $0.125 \leq y \leq 0.875$, $0 \leq n'$, $n' \leq n$ (n', n: integer), $0.125T \leq z \leq 1.0T$, a, $c \geq e \geq b$, d, $x \geq 3z$, where a time width of said pulse part is x, a power level of said pulse part fp is a, a power level of a low-level pulse of said multpulse part mp is b, a power level of a high-level pulse of said multpulse part mp is c, a duty ratio of the power level b and the power level c in said multipulse part mp is y, a time with of a sum of the power level b and the poser level c in said multipulse part mp in a repetition unit is T, a number. of times of repetition of the power level b and the power level c in said multipulse part mp is n-n', a time width of said pulse part ep is z, and a power level of said pulse part ep is d.

According to the above-mentioned invention, when information recording on the phase-change type optical recording medium is performed according to the PWM recording in which the time widths of the fp and ep of the recording wave pulse train and a duty ratio of mp, when performing signal recording or rewriting, the time width x of the pulse part fp is set equal to or greater than the time width z of the pulse part ep, and, thus, the recording layer which has been heated at a temperature equal to or higher than a melting point can be gradually cooled in a case of erasing already recorded information when rewriting information. Here, since the time width x of the pulse part fp is set in accordance with the time width z of the pulse part ep, it is not influenced by fluctuation in the linear velocity due to an adjustment of a rotational speed when performing, for example, high-speed recording of equal to or higher than 10-time speed. When performing information recording or rewriting, it is not influences by the linear velocity and a boundary between a recorded part and unrecorded part can be clarified by adjusting the duty ratio in the multipulse part mp. Thereby, it can be attempted to improve the overwrite characteristic.

In the above-mentioned invention, it is preferable that said time width x and said time width z satisfy a relationship $z \leq x \leq 4.5z$. Accordingly, since the time width x of the pulse part fp is set equal to or greater than 3 times and equal to or smaller than 4.5 times the time width z of the pulse part ep, the recording layer of the phase-change type optical recording medium can be prevented from being heated at a temperature equal to or higher than the melting point for an excessively long time. Thus, the land jitter is prevented from increasing at a time of initial recording. Thereby, the signal quality can be prevented from being degraded and an improvement in the overwrite characteristic can be effectively attempted even when overwrite is repeatedly performed.

Additionally, in the above-mentioned invention, a recording speed of the multi-speed method according to said multi-recording control means may be equal to or greater than 12.0 m/s. Accordingly, an improvement in the overwrite characteristic can be effectively attempted in the high linear velocity area of equal to or higher than 10-time speed, which is aimed, and a high-speed operation can be attempted without problems.

Additionally, there is provided according to another aspect of the present invention a recording method comprising: pulse-width-modulating (PWM) an output power of a light-emitting element of a recording apparatus that performs optical information recording or rewriting on a phase-change type optical recording medium; performing recording or rewriting of a 0-signal having a signal width equal to $nT$ ($T$ is a clock time) after modulation according to a recording wave which is a continuous light of a power level of e; and performing recording or rewriting of a 1-signal having a signal width equal to nT after modulation according to a recording wave which is a pulse train having a pulse part fp, a multipulse part mp and a pulse part ep, the pulse part fp for forming a head part of a recording mark by raising a temperature of a recording layer of said phase-change type optical recording medium at a temperature equal to or higher than a melting point, the multipulse part mp for forming a middle part of the recording mark by raising a temperature of the recording layer, the pulse part ep for forming a rear end of the recording mark by cooling the recording layer, wherein time widths x, y and z, power levels a, b, c, d and e, and numbers of times of repetition n and n' satisfy the following relationships: $0.5\,T \leqq x \leqq 2.0T$, $0.125 \leqq y \leqq 0.875$, $0 \leqq n'$, $n' \leqq n$ (n', n: integer) , $0.125T \leqq z \leqq 1.0T$, a, $c \geqq e \geqq b$, d, $x \geqq 3z$, where a time width of said pulse part is x, a power level of said pulse part fp is a, a power level of a low-level pulse of said multipulse part mp is b, a power level of a high-level pulse of said multipulse part mp is c, a duty ratio of the power level b and the power level c in said multipulse part mp is y, a time with of a sum of the power level b and the poser level c in said multipulse part mp in a repetition unit is T, a number of times of repetition of the power level b and the power level c in said multipulse part mp is n-n', a time width of said pulse part ep is z, and a power level of said pulse part ep is d.

According to the above-mentioned invention, when information recording on the phase-change type optical recording medium is performed according to the PWM recording in which the time widths of the fp and ep of the recording wave pulse train and a duty ratio of mp, when performing signal recording or rewriting, the time width x of the pulse part fp is set equal to or greater than three times the time width z of the pulse part ep, and, thus, the recording layer which has been heated at a temperature equal to or higher than a melting point can be gradually cooled in a case of erasing already recorded information when rewriting information. Here, since the time width x of the pulse part fp is set in accordance with the time width z of the pulse part ep, it is not influenced by fluctuation in the linear velocity due to an adjustment of a rotational speed when performing, for example, high-speed recording of equal to or higher than 10-time speed. When performing information recording or rewriting, it is not influences by the linear velocity and a boundary between a recorded part and unrecorded part can be clarified by adjusting the duty ratio in the multipulse part mp. Thereby, it can be attempted to improve the overwrite characteristic.

In the above-mentioned invention, said time width x and said time width z may satisfy a relationship $3z \leqq x \leqq 4.5z$. Accordingly, since the time width x of the pulse part fp is set equal to or greater than 3 times and equal to or smaller than 4.5 times the time width z of the pulse part ep, the recording layer of the phase-change type optical recording medium can be prevented from being heated at a temperature equal to or higher than the melting point for an excessively long time. Thus, the land jitter is prevented from increasing at a time of initial recording. Thereby, the signal quality can be prevented from being degraded and an improvement in the overwrite characteristic can be effectively attempted even when overwrite is repeatedly performed.

BRIEF DESCRIPTION OF THE DRAWINGS

FIG. 1 is a block diagram showing illustratively a structure of an optical disc apparatus according to an embodiment of the present invention.
FIG. 2 is a cross-sectional view showing principally a stacked structure of a phase-change type optical recording medium used in the optical disc apparatus.
FIGS. 3A - 3D are waveform chars showing recording waveform pulse trains of a laser light which a semiconductor laser of a recording and reproduction pickup.
FIGS. 4A - 4C are waveform charts exemplifying recording pulse waveforms.

BEST MODE FOR CARRYING OUT THE INVENTION

A description will be given, with reference to the drawings, of an embodiment of the present invention. The present embodiment shows an example of application to an optical disc apparatus as a recording apparatus that perform information recording or rewriting on a phase-change type optical recording medium in accordance with a multi-speed method.

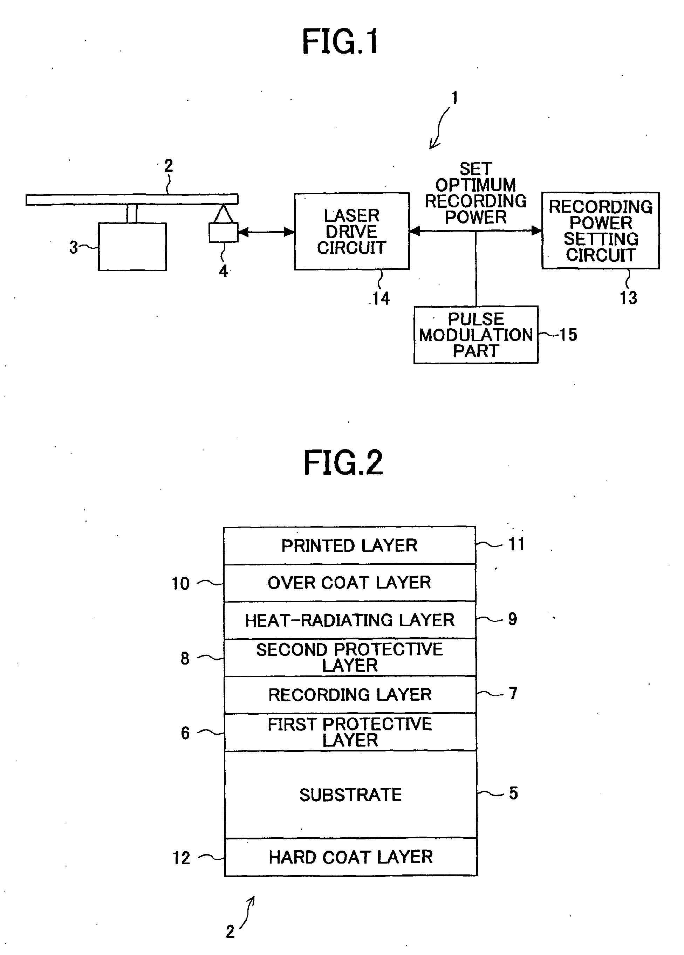

FIG. 1 is a block diagram showing roughly a structure of the optical disk apparatus according to the present embodiment. The optical disk apparatus 1 is provided with a drive unit 3 and a recording and reproducing pickup 4, the drive unit 3 as a rotation driving means rotationally driving a phase-change type optical recording medium 2 such as a CD-RW (Compact Disc Rewritable) by driving a spindle motor, the recording and reproducing pickup 4 having a semiconductor laser (not shown in the figure) as a light-emitting element that emits a laser light to be irradiated onto the phase-change type optical recording medium 2 which is rotationally driven by the drive unit 3.
Although explanation is omitted since it is a well-known technique, a multi-recording control means that controls to drive the drive unit 3 and the recording and reproducing pickup 4 so as to record or rewrite information according to a multi-speed method.

Here, FIG. 2 is a cross-sectional view showing principally a stacked structure of the phase-change type optical recording medium 2 used by the optical disk apparatus 1. The phase-change type optical recording medium 2 is provided with a substrate 5 having on one side thereof a guide groove not shown in the figure, of which width is set to 0.30-0.55 μm and depth is set to 300-550 Å. The substrate 5 according to the present embodiment is formed of a polycarbonate resin with a thickness of 1.2 mm. By forming the substrate 5 by a polycarbonate resin, an excellent characteristics can be provided with respect to moldability, optical characteristics and cost.

It should be noted that although the width of the guide groove is set to 0.30-0.50 micron and depth is set to 300-550 angstrom, they are not limited to these values. Additionally, although a polycarbonate resin, which is excellent in moldability, optical characteristics and cost, is used as a material to form the substrate 5, the material to form.the substrate 5 is not limited to the polycarbonate resin.

A first protective layer 6, a recording layer 7, a second protective layer 8 and a reflective heat dissipation layer 9 are sequentially stacked on a side of the substrate 5 where the guide groove is formed.

As a material which forms the first protective layer 6 and the second protective layer 8, there are listed a metal oxide such as SiO, $SiO_2$ ZnO, $SnO_2$, $Al_2O_3$, $TiO_2$, $In_2O_3$, MgO, $ZrO_2$, etc., a nitride such as $Si_3N_4$, AlN, TiN, BN, ZrN, etc., a sulfide such as ZnS, $In_2S_3$, $TaS_4$, etc., a carbide such as SiC, TaC, $B_4C$, WC, TiC, ZrC, etc., or a diamond-like carbon and a mixture of aforementioned. The first protective layer 6 and the second protective layer 8 are formed using a sputtering method, which is a well-known technique. Thereby, a phase-change type optical recording medium 2 that is excellent in mass-produceaility, film quality, etc. can be obtained.

The film thickness of the first protective layer 6 is set to fall within a range of 65-130 nm. Accordingly, it is possible to suppress influences to the reflectance so as to satisfy the reflectance of 0.15-0.25 that is a standard of the CD-RW disc at reproduction waveforms of 780 nm and 650 nm.

The film thickness of the second protective layer 8 is set within a range of 20-40 nm. Thereby, it can be attempted to improve a signal quality when performing repeatedly overwrite recording (hereinafter referred to as overwrite) and heat resistance and sensitivity when performing information recording, reproduction and rewriting.

The film thickness of the recording layer 7 is set within a range of 14-25 nm. Thereby, it can be attempted to improve initial characteristics, such as a jitter, an over-writing characteristic, and mass-production efficiency. Additionally, the recording layer 7 according to the present embodiment is formed using a sputtering method. Thereby, a recording layer suitable for mass-production can be obtained. Moreover, it can be attempted to improve a film quality since a record layer having a uniform thickness can be obtained.

A material containing a four-element system phase-change type recording material, as a main component, which contains Ag, In, Sb and Te, is suitable for the recording layer 7. By using as the recording layer 7 the material containing a four-element system phase-change type recording material, as a main component, which contains Ag, In, Sb and Te, a recording sensitivity and rate (change to amorphous), an erasing sensitivity and rate (crystallization) and erasing ratio can be well-maintained extremely. Moreover, by adjusting a composition ratio of the four elements including Ag, In, Sb and Te, an optimum recording linear velocity can be acquired while totally satisfying signal reproduction stability and signal life.

Here, the composition ratio of the four elements including Ag, In, Sb and Te is set so that conditions represented by the following equations are satisfied, where the composition ratio (atomic %) of Ag is α, the composition ratio (atomic %) of In is β, the composition ratio (atomic %) of Sb is γ and the composition ratio (atomic %) of Te is δ.

$$0.1 \leqq \alpha \leqq 7.0 \tag{1}$$

$$1 \leqq \beta \leqq 9 \tag{2}$$

$$61 \leqq \gamma \leqq 75 \tag{3}$$

$$22 \leqq \delta \leqq 30 \tag{4}$$

According to the above, it can be attempted to improve stability when reproducing a signal and a signal life.

Moreover, at least one or more kinds of elements selected from Ga, Zn, Sn, Si, Pb, Co, Cr, Cu, Ge, Au, Pd, Pt, S, Se, Ta, Nb, V, Bi, Zr, Ti, Al, Mn, Mo, Rh, C, N, and O are added to the recording layer 7. Thereby, crystallization of an amorphous mark can be suppressed. The signal reproduction stability and the signal life can be improved by controlling crystallization of the amorphous mark.

As a mechanism of suppression of crystallization of an amorphous mark, it is considered that crystallization of an amorphous mark is suppressed since these elements may get into a spatial gap of AgInSbTe, which forms a compound or an alloy with AgInSbTe.

Ga, Zn, Sn, Si, Pb, Co, Cr, Cu, Ge, Au, Pd, Pt, S, Se, Ta, Nb, V, Bi, Zr, Ti, Al, Mn, Mo, Rh, C, N, and O, which are added to the recording layer 7, can be considered as additive agents. As the additive agents, an element having a small atomic radius such as C, N, O, Si, Sn and Ge or an element having a large chemical bonding force or many chemical bonding hands with AgInSbTe is effective.

Furthermore, in order to acquire a reflectance needed when initializing, a relationship between Sb and Te is set to a range which satisfies the following equation.

$$\gamma + \delta \geqq 88 \qquad\qquad (5)$$

It was found by experiments that a reflectance necessary for initialization is reached when the above condition is satisfied. Thereby, the reflectance which is important when a liner velocity is high, especially the reflectance required for initialization can be acquired.

Although the first protective layer 6, the recording layer 7 and the second protective layer 8 are formed by a sputtering method, it is not limited to this, and, for example, the first protective layer 6, the recording layer 7 and the second protective layer 8 may be formed by various vapor deposition methods.

A reflective heat-radiating layer 9 that is formed on an opposite side of the second protective layer 8 with respect to the recording layer 7 is set to have a film thickness in a range of 100-160 nm. As the reflective heat-radiating layer 9, a metal material such as Al, Au, Ag, Cu, Ta, Ti or W, or an alloy of those can be used. Moreover, as an additive element added to the reflective heat-radiating layer 9, Cr, Ti, Si, Cu, Ag, Pd, Ta, etc. are used. The reflective heat-radiating layer 9 can be formed by various vapor deposition methods.

An overcoat layer 10 is stacked on a side of the reflective heat-radiation layer 9 opposite to the second protective layer 8. By providing the overcoat layer 10, oxidization of the reflective heat-radiating layer 9 can be prevented. The overcoat layer 10 of the present embodiment is formed to have a thickness of 3-15 micron by irradiating an ultraviolet beam onto an ultraviolet curable resin applied by a spin coating method. Thereby, it can be attempted to prevent an increase in error and improve mechanical properties when recording or reproducing information.

It should be noted that although the ultraviolet curable resin is used as the overcoat layer 10 in the present embodiment, it is not limited to this.

A printed layer 11 is laminated on a side of the overcoat layer 10 opposite to the reflective heat-radiation layer 9. The printed layer 11 is formed by a screen-printing, etc. In addition, a hard coat layer 12 is laminated on a side of the substrate 5 opposite to the first protective layer 6. It can be attempted to improve an abrasion resistance by providing the hard coat layer 12. The hard coat layer 12 of the present embodiment is formed so as to have a thickness of a range of 2-6 $\mu$m by irradiating an ultraviolet beam onto an ultraviolet curable resin applied by a spin coating method, thereby improving an abrasion resistance and mechanical properties. It can be attempted to prevent the hard coat layer 12 from being electrically charged and adhesion of dusts can be prevented by mixing an electrically conducting material if necessary.

The semiconductor laser of the recording and reproducing pickup 4 emitting a laser light to be irradiated onto the phase-change type optical recording medium 2 is controlled by a laser drive circuit 14 so as to output the laser light of an optimum recording power set by a recording power setting circuit 13.

In addition, the optical disc apparatus 1 is provided with a pulse modulation part 15 as a modulating means to modulate a record signal by a PWM method according to the amplitude of a modulation signal wave. The pulse modulation part 15 of the present embodiment modulates a signal to be recorded by using a clock T by using an EFM (Eight-to-Fourteen Modulation) modulation method appropriate to the information recording onto the above-mentioned phase-change type optical recording medium or an improved modulation method (EFM+) thereof.

When performing recording or rewriting a 0-signal having a signal width after modulation is nT (a time corresponding to a period of a clock used for signal modulation) based on the recording signal modulated by the pulse modulation part 15, the recording and reproducing pickup 4 irradiates a recording wave which is a continuous wave of a power level e.

When performing recording or overwrite a 1-signal having a signal width after modulation is nT based on the recording signal modulated by the pulse modulation part 15, the recording and reproducing pickup 4 irradiates a recording wave of a pulse train having a pulse part fp, a multipulse part mp and a pulse part ep.

The recording wave in the pulse part fp causes a head part of the recording mark to be formed by raising the recording layer 7 of the phase-change type optical recording layer 2 at a temperature exceeding a melting point. The recording wave in the pulse part mp causes a middle part of the recording mark to be formed by raising the recording layer 7 at a temperature exceeding the melting point. The recording wave in the pulse part ep causes a rear end of the recording mark by cooling the recording layer 7.

When performing information recording or overwrite, a recording power of the pulse part fp is irradiated onto the phase-change type optical recording medium 2, which raises the temperature of the recording layer 7 of the phase-change type optical recording medium 2 equal to or higher than the melting point. When a recording power of the multipulse part mp is irradiated onto the recording layer 7, the middle part of the recording mark having a length corresponding to a time width z in the multipulse part mp. When the recording power of the pulse part ep is irradiated, the recording layer 7, which has been heated at a temperature exceeding the melting point, is cooled, which causes formation of the rear end of the recording mark.

Although it is a well-known technology, the recording layer 7 that is in an amorphous state by being heated at a temperature exceeding the melting point forms an amorphous part by being solidified in the amorphous state by being rapidly cooled. This amorphous part is caused to be the recording mark.

The optical disc apparatus 1 of the present embodiment adjusts the duty ratio y of the multipulse part mp in response to fluctuation in a linear velocity so as to perform the information recording or overwrite according to the multi-speed method.

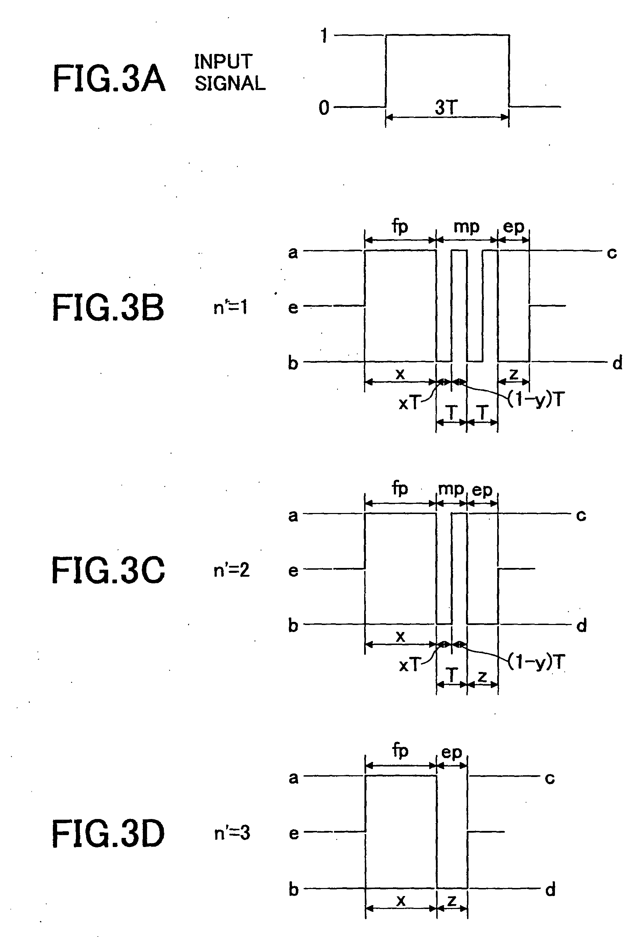

Here, FIGS. 3A-3D are waveform charts showing the recording wave pulse trains of the laser light radiated from the light source of the recording and reproducing pickup 4. FIG. 3A shows the recording signal in a case in which the signal width after modulation is 3T (n=3). FIG. 3B shows the recording wave pulse train in a case in which n=3 and n'=1. FIG. 3C shows the recording wave pulse train in a case in which n=3 and n'=2. FIG. 3D shows the recording wave pulse train in a case in which n=3 and n'=3. The recording and reproducing pickup 4 of the present embodiment is set to have a relationship between the time width x, y and z, and the power levels a, b, c, d, e and n and n' satisfies the condition represented by the conditions represented by the following conditions in a case where a time width of the pulse part fp is x, a power level of the pulse part fp is a, a power level of a low-level pulse of the multipulse part mp is b, a power level of a high-level pulse of the multipulse part mp is c, a duty ratio of the power level b to the power level c in the multi pulse part mp is y, a time width which is a repeating unit which is a sum of the power level b and the power level c in the multi pulse part mp is T, a number of repeat of the power level b and the power level c in the multipulse part mp is n-n', and a time width of the pulse part ep is z, and a power level of the pulse part ep is d.

$$0.5\,T \leqq x \leqq 2.0T \tag{6}$$

$$0.125 \leqq y \leqq 0.875 \tag{7}$$

$$0 \leqq n' \tag{8}$$

$$n' \leqq n \; (n' ,\, n: \text{integer}) \tag{9}$$

$$0.125T \leqq z \leqq 1.0T \tag{10}$$

$$a,\, c \geqq e \geqq b,\, d \tag{11}$$

$$3z \leqq x \leqq 4.5z \tag{12}$$

As appreciated from an equation (12), the time width x of the pulse part fp is set to three timed or more of the time width z of the pulse part ep and equal to or smaller than 4.5. Moreover, a suitable ranges of the above-mentioned power levels a-e are 8 mW<a, c<40 mW, 0 mW≦b, d<2 mW, and 4 mW<e<20 mW. Conventionally, when the linear velocity fluctuates and becomes high-speed due to an adjustment of the rotational speed, the recording layer 7 of the phase-change type optical recording medium 2 that is heated at a temperature exceeding the melting point cannot be gradually cooled, which may result in solidification in an amorphous state. For this reason, there was a problem in that already recorded information remains without being erased.

In the present embodiment, as appreciated from the equation (12), since the time width x of the pulse part fp is set to equal to or grater than three times the time width z of the pulse part ep, it is possible to gradually cool the recording layer 7 of the phase-change type optical recording medium 2 that was which has been heated at a temperature equal to or higher than the melting point. Thereby, when overwriting information, it can be prevented to remain the already recorded information which is not completely erased, which enables improvement in an overwrite characteristic. Here, the overwrite characteristics means good/defect of the overwritten signal in a case where a part of the phase-change type recording medium 2 on which information already been recorded is overwritten with another information.

Similarly, although it is a well-known technology, the recording layer 7, which is in an amorphous state due to temperature-raising at a temperature equal to or higher than the melting point, is crystallized by being gradually cooled. Since this state is the same as the initialization state of the recording layer 7, it becomes that there is no information recorded.

In the meantime, according to the PWM recording method, when recording or overwriting information on the recording layer 7 of the phase-change type optical recording medium 2, information is given to an edge part of the recording mark.

At this time, if the boundary between a recorded part. (amorphous part) and a unrecorded part (crystal part) is unclear, or the information is erased due to crystallization of a part which must be the recorded part, the signal quality is deteriorated.

Moreover, when the timed width x of the pulse part fp is excessively large, an initial asymmetry becomes deep, and, thus, the signal quality is degraded each time an overwrite is repeated even if the condition is satisfied that the time width x of the pulse part fp is equal to or grater than twice the time width z of the pulse part ep.

In the present embodiment, the time width x of the pulse part fp is set to equal to or greater than 3 times the time width z of the pulse part ep and equal to or smaller than 4.5 times the time width z so as to prevent the recording layer of the phase-change type optical recording medium from being heated at a temperature equal to or higher than the melting point for an excessively long time. Thereby, it can be suppressed that a balance of the recorded part and the unrecorded part is off due to an increase in land jitter, and degradation of the signal quality can be prevented, when an overwrite is repeatedly performed, so as to improve the overwrite characteristics more effectively.

Additionally, since the time width x of the pulse part fp is set according to the time width z of the pulse part ep, it is not influenced by fluctuation of the linear velocity due to an adjustment of a rotational speed when, for example, performing a high-speed recording. Thereby, it can be attempted to achieve a high-speed information recording or overwrite by applying to a recording apparatus that can perform multi-speed recording.

Since, in the case where fluctuation of the linear velocity occurs due to an adjustment of a rotational speed, the balance between the recording linear velocity and the recording power is adjusted by increasing or decreasing the duty ratio in the multipulse part mp in response to the recording linear velocity when performing information recording or overwrite, the boundary between the recorded part and the unrecorded part can be clarified without being influenced by the linear velocity.

Thus, it is possible to provide an optical disc apparatus according to a multi-speed recording method that can attempt to an improvement in the recording quality by preventing occurrence of jitter.

In the conventional optical disc apparatus 1 performing multi-speed recording, since a balance of the pulse part fp and the pulse part ep is fixed, there is problems in that the signal quality is influenced by a heat transferred to a part other than a part of the recording layer 7 to be recorded due to an excessive recording power being applied to the recording layer 7 when the linear velocity is low, and, on the other hand, a sufficient recording power cannot be applied to a part to be recorded when the linear velocity is high.

In the present embodiment, a balance of the recording linear velocity and the recording power can be well-maintained by adjusting the duty ratio y of the multipulse part mp in response to the linear velocity. Additionally, by using the phase-change type optical recording medium 2 having the recording layer 7 of which main component is Ag, In, Sb and Te, thermal physicality of the recording layer 7 can be matched the recording wave, which enables the balance of the recording linear velocity and the recording power to be set to a more appropriate value.

Thus, by adjusting the duty ratio y of the multipulse part mp in response to the recording linear velocity, it can be attempted to improve the recording signal quality when performing information recording or overwrite according to a multi-speed method.

In addition, in the phase-change type optical recording medium 2 with melting and raid cooling of the recording layer 7 when performing information recording, in a view point of a balance of melting and rapid cooling of the recording layer 7, it has been found that the duty ratio of 0.5 of the recording pulse is advantageous for various signal qualities and overwrite.

Accordingly, in the optical disc apparatus 1 that performs information recording or overwrite according to the multi-speed method, recording of a higher reliability can be performed in practice by setting a recording pulse waveform, at which the duty ratio of the multipulse part mp is 0.5, to a high-speed recording side of the optical disc apparatus that can perform multi-speed recording or, preferably, to a maximum recording linear velocity.

In the recording method for the phase-change type optical recording medium 2 according to the present embodiment (including a DVD system disc such as CD-RW or DVD+RW, it is required not only erasable at a high-speed but also an initial characteristic such as jitter and an overwrite characteristic, and it was found as mentioned above that it is especially effective if $x \geqq 3z$ where the time width of the fp part is x and the time width of the op part is z, in the multi-speed recording, especially, at a high linear velocity exceeding 12.0 m/s which is 10 times speed. Incidentally, sufficient erasure cannot be performed on a preciously recorded signal when x<3z. For this reason, there remains an unerased part, which is disadvantageous to overwrite due to influences given to a sensitivity of recording (change to amorphous) and erasure (crystallization). Therefore, when $x \geqq 3z$, it was effective for the overwrite property when performing multi-speed recording.

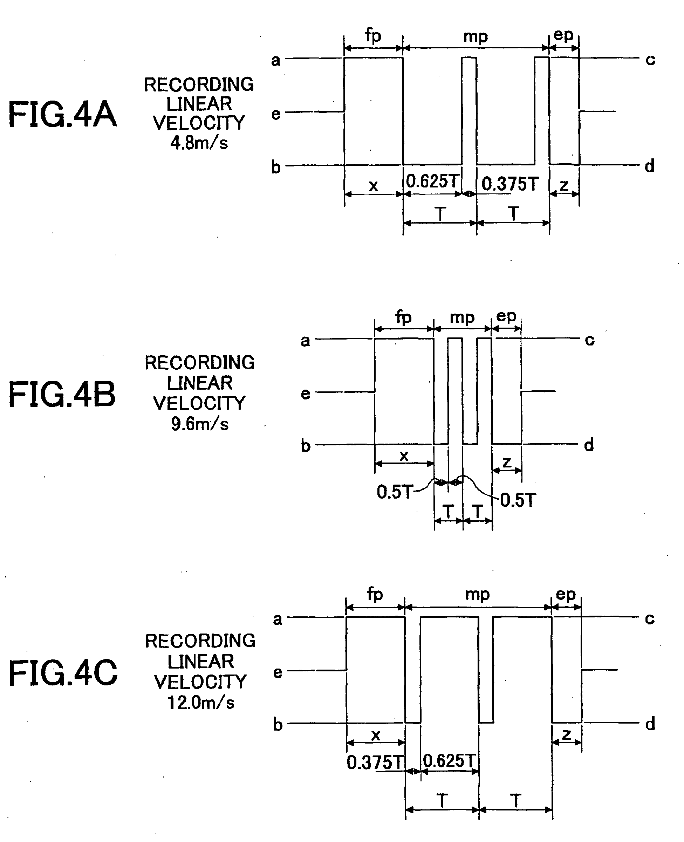

Moreover, in the present embodiment, in the multi-speed recording, especially a high linear velocity exceeding 12.0 m/s which is 10 times speed, it was found as mentioned above that it is effective to an initial characteristic such as jitter when $x \leqq 4.5z$ where the time width of the fp part is x and the time width of the op part is z similar to the above. Incidentally, when x>4.5z, the initial asymmetry becomes deep. Additionally, the mark jitter becomes good at the time of initial recording while the land jitter increases, it becomes difficult to maintain a balance of both. For this reason, the signal quality is degraded each time an overwrite is repeated many times. Therefore, when in x<=4.5z, it was found that it is effective to the initial characteristic of the multi-speed recording. Here, a description will be given of a change in the recording pulse waveform in a case where recording is performed at a multi-speed of 4 times speed to 10-time speed by using a CD-RW as the phase-change type optical recording medium in the optical disc apparatus 1 in which a 1 time speed is set to 1.2 m/s. FIGS. 4A-4C are waveform charts illustrating recording pulse waveforms. Here, as shown in FIG. 4B, the duty ratio of the multipulse part mp in the case of recording information on the CD-RW at a recording linear velocity 9.6 m/s as 8-time speed is set to 0.5.

FIG. 4A shows a pulse waveform chart in a case of information recording on the CD-RW at a recording linear velocity 4.8 m/s as 4-time speed. In the case where recording is performed at a relatively low linear velocity such as 4.8 m/s as a 4-time speed, the duty ratio of the multipulse part mp is set to 0.625 so as to make the recording pulse of the multipulse part mp thin and elongate the cooling time of the multipulse part mp. Accordingly, a mark having little position offset of the edge can be recorded while reducing excessive thermal damage.

FIG. 4C shows a pulse waveform chart in a case of information recording on the CD-RW at a recording linear velocity 12.0 m/s as a 10-time speed. In the case where recording is performed at 12.0 m/s as a 10-time speed, the duty ratio of the multipulse part mp is set to 0.375 so as to make the recording pulse of the multipulse part mp thick and shorten the cooling time. Accordingly, eve when performing recording at a high speed of 12.0 m/s, an energy sufficient for phase-changing the recording film, and the recording layer can be rapidly cooled even if the cooling time of the multipulse part mp is short due to a high-speed. Thus, even if the recording linear velocity is high, a mark having a small position offset can be recorded.

Here, a comparison will be given of a difference between a case of recording information on the phase-change type optical recording medium 2 shown below using the above-mentioned optical disc apparatus 1 (practical examples 1-3) and a case of recording information on a phase-change type optical recording apparatus using a conventional optical disc apparatus (comparative examples 1-3).

For the optical disc apparatus 1, the recording and reproducing pickup 4 having a semiconductor laser with a wave length of 780 nm and an objective lens of which numerical aperture NA is set to 0.5 was used. The recording signal was an input signal that has been EFM-modulated.

As for the phase-change optical recording medium 2, the substrate 5, which is made of polycarbonate resin with a thickness of 1.2 mm and having a guide groove (wobble) of a width of 0.5 mm and a depth of 35 nm, was used.

$ZnSSiO_2$ was used for the first protective layer 6 and the second protective layer 8. A thickness (film thickness) of the first protective layer 6 was set to 90 nm, and a thickness (film thickness) of the second protective layer 8 was set to 30 nm.

Composition of the recording layer 7 is set to Agl.0In7.5Sb66.5Te25.0, and a thickness (film thickness) was set to 18 nm. The entire surface of the recording layer 7 was subjected to a crystallization process by an initialization apparatus (not shown in the figured) having a large diameter LD.

The reflective heat-radiating layer 9 was formed of an aluminum alloy of a thickness of 140 nm.

Each of the first protective layer 6, the recording layer 7, the second protective layer 8 and the reflective heat-radiating layer 9, which are stacked on the substrate 5, were formed by a sputtering method.

The overcoat layer 10 and the hard coat layer 12 were both formed of an ultraviolet curable resin by using a spin coat method. The printed layer 11 is formed by printing on the overcoat layer 10.

Recording was performed on the phase-change type optical recording medium 2 according to the pulse part fp and pulse part ep that were adjusted to the time widths described in Table 1, respectively, in a state where the recording linear velocity of the optical disc apparatus 1 is set to 12.0 m/s and the duty ratio of the multipulse part mp is set to 0.5 (specifications of the practical examples 1-3 and the comparative examples 1-3).

Table 1

|  | X (time width of fp part) | Z (time width of op part) |
|---|---|---|
| Practical Example 1 | 1.125T | 0.375T |
| practical Example 2 | 1.000T | 0.250T |
| Practical Example 3 | 1.125T | 0.250T |
| Comparative Example 1 | 1.000T | 0.375T |
| Comparative Example 2 | 1.000T | 0.125T |
| Comparative Example 3 | 1.250T | 0.250T |

Table 2 shows the result of 3T jitter acquired by reproducing a signal at 1.2 m/s after performing an overwrite at a linear velocity of 14.4 m/s one time and 1,000 times by using the time widths x and z of the fp part and the op part according to the practical examples 1-3 and the comparative examples 1 shown in Table 1.

Table 2

|  | 3T land jitter after 1 time | 3T mark jitter after 1 time |
|---|---|---|
| P.Ex.1 | 33.1 ns | 27.1 ns |
| P.Ex.2 | 28.9 ns | 26.2 ns |
| P.Ex.3 | 27.4 ns | 26.7 ns |
| C.Ex.1 | 43.7 ns | 36.7 ns |
|  | 3T land jitter after 1,000 times | 3T mark jitter after 1,000 times |
| P.Ex.1 | 35.9 ns | 25.7 ns |
| P.Ex.2 | 33.8 ns | 25.0 ns |
| P.Ex.3 | 32.1 ns | 23.8 ns |
| C.Ex.1 | 43.4 ns | 33.0 ns |

P.Ex.: Practical Example
C.Ex.: Comparative Example

When the time width x=1.00T of the fp part described in the comparison example 1 was elongated to 1.125.T described in the practical example 1, 3T jitter after one time overwrite was good. Moreover, as described in the practical example 2, when the time width z=0.375T of the op part described in the comparative example 1 is shortened to 0.25T described in the practical example 2, 3T jitter after one time overwrite was improved as well, and, further, a similar 3T jitter was acquired even in the practical example 3 in which x is elongated to 1.125T from the practical example 2. In the practical examples 1-3, 3T land jitter after 1,000 overwrites were as good as 35.9 ns, 33.8 ns and 32.1 ns. Therefore, it was found that it is effective to the overwrite characteristics when $x \geqq 3z$.

Table 3 shows the result asymmetry and 3T jitter acquired by reproducing a signal one time recorded at a linear velocity of 14.4 m/s by using the time widths x and z of the fp part and the op part according to the practical examples 2 and 3 and the comparative examples 2 and 3 shown in Table 1. Here, the power level was set to a=c=23.8 mW, e=8.4 mW and b=d=1.0 (at the time of 12x recording).

Table 3

|  | Initial 3T Land jitter | Initial 3T Mark jitter | Asymmetry |
|---|---|---|---|
| P.Ex.2 | 21.7 ns | 16.1 ns | -5.3 |
| P.Ex.3 | 18.8 ns | 17.3 ns | -8.0 |
| C.Ex.2 | 27.7 ns | 19.3 ns | -14.2 |
| C.Ex.3 | 27.1 ns | 16.8 ns | -11.9 |

P.Ex.: Practical Example
C.Ex.: Comparative Example

When the time width z=0.25T of the op part described in the practical example 2 was reduced to 0.125T described in the comparative example 2, the value of the initial asymmetry was as deep as -10. Moreover, the same happened when the time width x=1.125T of the fp part is elongated to 1.25T described in the comparison example 3.

Furthermore, in the comparative examples 2 and 3, the difference between 3T land jitter and 3T mark jitter is increased greatly, and, especially, there was a difference equal to or more than 10 ns in the comparison example. Therefore, it was found that it is effective to the initial recording characteristics when $x \leq 4.5z$.

Moreover, 3T land jitter and 3T mark jitter (3T bit jitter) was acquired in a case as a practical example 4 in which the recording area is divided at a position of r=40 mm and a recording linear velocity of the inner side is set to 12.0 m/s (10x) and a recording linear velocity of the outer side is set to 14.4 m/s (12x). The strategy (time widths) x and z were the same as the practical example 1, each power level at 10-time speed (10x) was set to a=c=19.0 mW, e= 6.7 mW and b=d=1.0, and each power level at the 12-time speed (12x) was set to a=c=23.8 mW, e= 8.4 mW and b=d=1.0. The obtained result was as follows.

| After one time overwrite | |
|---|---|
| (Inner periphery (10x) side) | 3T land jitter: 26.3 ns<br>3T mark jitter: 24.0 ns |
| (Outer periphery (12x) side) | 3T land jitter: 31.0 ns<br>3T mark jitter: 26.8 ns |
| After 1,000 times overwrites | |
| (Inner periphery (10x) side) | 3T land jitter: 22.6 ns<br>3T mark jitter: 20.7 ns |
| (Outer periphery (12x) side) | 3T land jitter: 34.7 ns<br>3T mark jitter: 25.2 ns |

It should be noted that although the CD-RW was used in the above examples, the present invention is applicable to a DVD disc such as DVD+RW (recording at 2x or 2.4x or more) and the same effect can be obtained.

The present invention is not limited to the specifically disclosed embodiments, and variations and modifications may be made without departing from the scope of the present invention.

## Claims

1. A recording apparatus comprising:

   a light-emitting element emitting a light to be irradiated onto a phase-change type optical recording medium;
   rotational drive means for rotationally driving said phase-change type optical recording medium;
   multi-recording control means for optically performing information recording or rewriting on said phase-change type optical recording medium by said light-emitting element and said rotational drive means according to a multi-speed method; and
   modulation means for pulse-width-modulating (PWM) the light emitted from said light-emitting element when performing the information recording or rewriting by said multi-speed recording control means,

   wherein recording or rewriting of a 0-signal having a signal width equal to nT (T is a clock time) after modulation by said modulation means is performed by a recording wave which is a continuous light of a power level of e,
   recording or rewriting of 1-signal having a signal width equal to nT after modulation by said modulation means is performed by a recording wave which is a pulse train having a pulse part fp, a multipulse part mp and a pulse part ep, the pulse part fp for forming a head part of a recording mark by raising a temperature of a recording layer of said phase-change type optical recording medium at a temperature equal to or higher than a melting point, the multipulse part mp for forming a middle part of the recording mark by raising a temperature of the recording layer, the pulse part ep for forming a rear end of the recording mark by cooling the recording layer, and
   time widths x, y and z, power levels a, b, c, d and e, and numbers of times of repetition n and n' satisfy the following relationships:

$$0.5 \, T \leq x \leq 2.0T,$$

$$0.125 \leq y \leq 0.875,$$

$$0 \leqq n',$$

$$n' \leqq n \ (n', n: \text{integer}),$$

$$0.125T \leqq z \leqq 1.0T,$$

$$a, c \geqq e \geqq b, d,$$

$$x \geqq 3z,$$

where a time width of said pulse part is x, a power level of said pulse part fp is a, a power level of a low-level pulse of said multpulse part mp is b, a power level of a high-level pulse of said multpulse part mp is c, a duty ratio of the power level b and the power level c in said multiplse part mp is y, a time with of a sum of the power level b and the poser level c in said multiplse part mp in a repetition unit is T, a number of times of repetition of the power level b and the power level c in said multiplse part mp is n-n', a time width of said pulse part ep is z, and a power level of said pulse part ep is d.

2. The recording apparatus as claimed in claim 1, wherein said time width x and said time width z satisfy a relationship $3z \leqq x \leqq 4.5z$.

3. The recording apparatus as claimed in claim 1 or 2, wherein a recording speed of the multi-speed method according to said multi-recording control means is equal to or greater than 12.0 m/s.

4. A recording method comprising:

pulse-width-modulating (PWM) an output power of a light-emitting element of a recording apparatus that performs optical information recording or rewriting on a phase-change type optical recording medium;
performing recording or overwrite of a 0-signal having a signal width equal to nT (T is a clock time) after modulation according to a recording wave which is a continuous light of a power level of e; and
performing recording or rewriting of a 1-signal having a signal width equal to nT after modulation according to a recording wave which is a pulse train having a pulse part fp, a multipulse part mp and a pulse part ep, the pulse part fp for forming a head part of a recording mark by raising a temperature of a recording layer of said phase-change type optical recording medium at a temperature equal to or higher than a melting point, the multipulse part mp for forming a middle part of the recording mark by raising a temperature of the recording layer, the pulse part ep for forming a rear end of the recording mark by cooling the recording layer,

wherein time widths x, y and z, power levels a, b, c, d and e, and numbers of times of repetition n and n' satisfy the following relationships:

$$0.5 \ T \leqq x \leqq 2.0T,$$

$$0.125 \leqq y \leqq 0.875,$$

$$0 \leqq n',$$

$$n' \leqq n \ (n', n: \text{integer}),$$

$$0.125T \leqq z \leqq 1.0T,$$

$$a, c \geqq e \geqq b, d,$$

$$x \geqq 3z,$$

where a time width of said pulse part is x, a power level of said pulse part fp is a, a power level of a low-level pulse of said multpulse part mp is b, a power level of a high-level pulse of said multpulse part mp is c, a duty ratio of the power level b and the power level c in said multipulse part mp is y, a.time with of a sum of the power level b and the poser level c in said multipulse part mp in a repetition unit is T, a number of times of repetition of the power level b and the power level c in said multipulse part mp is n-n', a time width of said pulse part ep is z, and a power level of said pulse part ep is d.

5. The recording method as claimed in claim 4, wherein said time width x and said time width z satisfy a relationship $3z \leqq x \leqq 4.5z$.

# FIG.1

2

LASER DRIVE CIRCUIT

3

4

14

SET OPTIMUM RECORDING POWER

PULSE MODULATION PART ~15

RECORDING POWER SETTING CIRCUIT

13

1

# FIG.2

| PRINTED LAYER | ~ 11 |
| OVER COAT LAYER | 10 ~ |
| HEAT-RADIATING LAYER | ~ 9 |
| SECOND PROTECTIVE LAYER | 8 ~ |
| RECORDING LAYER | ~ 7 |
| FIRST PROTECTIVE LAYER | 6 ~ |
| SUBSTRATE | ~ 5 |
| HARD COAT LAYER | 12 ~ |

2

FIG.3A INPUT SIGNAL

FIG.3B n'=1

FIG.3C n'=2

FIG.3D n'=3

**FIG.4A** RECORDING LINEAR VELOCITY 4.8m/s

fp  mp  ep

a  c

e

b  d

x  0.625T  0.375T  z

T  T

**FIG.4B** RECORDING LINEAR VELOCITY 9.6m/s

fp  mp  ep

a  c

e

b  d

x  z

0.5T  0.5T

T  T

**FIG.4C** RECORDING LINEAR VELOCITY 12.0m/s

fp  mp  ep

a  c

e

b  d

x  z

0.375T  0.625T

T  T

## INTERNATIONAL SEARCH REPORT

| | International application No. |
|---|---|
| | PCT/JP03/03180 |

### A. CLASSIFICATION OF SUBJECT MATTER
Int.Cl⁷ G11B7/0045, 7/006

According to International Patent Classification (IPC) or to both national classification and IPC

### B. FIELDS SEARCHED

Minimum documentation searched (classification system followed by classification symbols)
Int.Cl⁷ G11B7/00-7/013, 7/24

Documentation searched other than minimum documentation to the extent that such documents are included in the fields searched
| | | | |
|---|---|---|---|
| Jitsuyo Shinan Koho | 1922–1996 | Jitsuyo Shinan Toroku Koho | 1996–2003 |
| Kokai Jitsuyo Shinan Koho | 1971–2003 | Toroku Jitsuyo Shinan Koho | 1994–2003 |

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X<br>Y | JP 9-138947 A  (Ricoh Co., Ltd.),<br>27 May, 1997 (27.05.97),<br>Full text<br>& EP 737962 A2       & US 5740149 A | 1,4<br>2,5 |
| Y | JP 9-282660 A  (Hitachi, Ltd.),<br>31 October, 1997 (31.10.97),<br>Par. No. [0017]<br>& EP 802531 A2 | 2,5 |
| Y | WO 97/14143 A1  (Matsushita Electric Industrial Co., Ltd.),<br>17 April, 1997 (17.04.97),<br>Page 44; line 11 to page 47, line 4<br>& EP 797193 B1       & US 5745467 A | 2,5 |

☐ Further documents are listed in the continuation of Box C.　　☐ See patent family annex.

| | |
|---|---|
| * Special categories of cited documents:<br>"A" document defining the general state of the art which is not considered to be of particular relevance<br>"E" earlier document but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| 07 April, 2003 (07.04.03) | 22 April, 2003 (22.04.03) |

| Name and mailing address of the ISA/<br>　　Japanese Patent Office | Authorized officer |
|---|---|
| Facsimile No. | Telephone No. |

Form PCT/ISA/210 (second sheet) (July 1998)

## INTERNATIONAL SEARCH REPORT

| International application No. |
| --- |
| PCT/JP03/03180 |

**Box I   Observations where certain claims were found unsearchable (Continuation of item 2 of first sheet)**

This international search report has not been established in respect of certain claims under Article 17(2)(a) for the following reasons:

1. ☐ Claims Nos.:

   because they relate to subject matter not required to be searched by this Authority, namely:

2. ☒ Claims Nos.:  3

   because they relate to parts of the international application that do not comply with the prescribed requirements to such an extent that no meaningful international search can be carried out, specifically:
   The description of the recording speed not lower than 12.0 m/s defines only the lower limit and includes a case of infinity.  The specification gives no explanation on the recording operation at the infinite speed.

3. ☐ Claims Nos.:

   because they are dependent claims and are not drafted in accordance with the second and third sentences of Rule 6.4(a).

**Box II   Observations where unity of invention is lacking (Continuation of item 3 of first sheet)**

This International Searching Authority found multiple inventions in this international application, as follows:

1. ☐ As all required additional search fees were timely paid by the applicant, this international search report covers all searchable claims.

2. ☐ As all searchable claims could be searched without effort justifying an additional fee, this Authority did not invite payment of any additional fee.

3. ☐ As only some of the required additional search fees were timely paid by the applicant, this international search report covers only those claims for which fees were paid, specifically claims Nos.:

4. ☐ No required additional search fees were timely paid by the applicant. Consequently, this international search report is restricted to the invention first mentioned in the claims; it is covered by claims Nos.:

**Remark on Protest**   ☐   The additional search fees were accompanied by the applicant's protest.
☐   No protest accompanied the payment of additional search fees.

Form PCT/ISA/210 (continuation of first sheet (1)) (July 1998)